# EUROPEAN PATENT SPECIFICATION

(11) **EP 2 357 371 B1**
(45) Date of publication and mention of the grant of the patent: **28.11.2012**
(21) Application number: 10305109.0
(22) Date of filing: 03.02.2010
(51) Int. Cl.: F16C 19/10, F16C 33/76, B60G 15/06, F16J 15/32

(54) **Rolling bearing for a suspension thrust bearing device**
Wälzlager für eine Aufhängungsvorrichtung mit Axiallager
Roulement à rouleaux pour dispositif de roulement de butée de suspension

(43) Date of publication of application: 17.08.2011
(73) Proprietor: Aktiebolaget SKF, 415 50 Göteborg (SE)
(72) Inventor: Corbett, Richard, 37230 Fondettes (FR); Houdayer, Christophe, 37360 Semblancay (FR); Vidot, Désiré, 37300 Joue les Tours (FR); Brulard, Cédric, 37390 Charentilly (FR); Charpentier, Jacques, 37100 Tours (FR)
(74) Representative: Casalonga, Axel

(56) References cited:
- FR-A1- 2 429 926
- FR-A1- 2 816 550
- US-A- 4 780 005

## Description

The present invention relates to the field of rolling bearing adapted to the suspension thrust bearing devices used in particular on motor vehicles in the suspension struts of the steered road wheels.

The invention relates more particularly to a rolling bearing comprising a top ring and a bottom ring between which are positioned a seal and rolling elements, for example balls or rollers. The top and bottom rings may be mounted in contact with bottom and top bearing or support pieces, such as covers or cups. The top and bottom cups form a housing for the rings of the rolling bearing and provide the interface between said rings and the neighboring elements.

A suspension thrust bearing device is positioned in the top part of the suspension strut between the bodywork of the vehicle and a suspension spring. The spring is fitted around a damping piston rod, the end of which is linked to the bodywork of the vehicle through an elastic block that filters the vibrations. The suspension spring axially bears, directly or indirectly, on the bottom cup. The top cup is fixed relative to the bodywork of the vehicle.

The rolling bearing makes it possible to transmit axial forces between the suspension spring and the bodywork of the vehicle, while allowing a rotation movement between the bottom cup and the filtering elastic block. This relative angular movement derives from a steer angle of the steered road wheels of the vehicle and/or the compression of the suspension spring. For more detail, it is possible for example to refer to the French patent application FR-A1-2 688 836.

The French patent application FR-A1-2 617 252 also discloses such a rolling bearing adapted to a suspension thrust bearing device. The disclosed rolling bearing comprises a bottom ring, a top ring and a seal disposed radially between said rings and adapted to axially retain the bottom ring relative to the top ring.

To fix the seal to the top ring, cut-out windows are formed on an external skirt of the top ring during stamping of said ring and external clipping sections are also foreseen on the seal to cooperate with said windows. This prevents the seal from moving both axially and radially between the rings.

To this end, the French patent application FR-A1-2 816 550 discloses a top ring having an external skirt comprising bosses which are created by the displacement of metal material radially inwards. External sections of the seal may be clipped onto said bosses to block the seal between the two rings.

In both two latter prior art documents, during the rolling bearing assembly, the seal must be angularly oriented or indexated relative to the top ring before mounting. In fact, these designs of seals each use external clipping sections to mate with the associated cut-out windows or bosses of the top ring. This leads to an increase of the assembly time as well as the overall cost of the rolling bearing.

One aim of the present invention is therefore to overcome this drawback.

It is a particular object of the present invention to provide a rolling bearing, particularly adapted to a suspension thrust bearing device, which is simple to assembly and economic, while guaranteeing an efficient sealing to prevent the ingress of moisture, dust and other foreign matter into the bearing.

In one embodiment, the rolling bearing comprises a bottom ring, a top ring, at least one row of rolling elements mounted between the rings, and a seal radially disposed between said rings and made from plastic material. The seal comprises attaching means adapted to cooperate with the top ring to fix the seal to said ring and axial retaining means for axially retaining the bottom ring relative to the top ring.

The attaching means of the seal comprises an annular radial rib coming into friction contact against a skirt of the top ring and axially positioned above at least a radial protrusion of said skirt so as to interfere diametrically with said radial protrusion.

The external diameter of the annular radial rib of the seal in a free state is greater than the internal diameter of the skirt of the top ring so as to create a permanent interference fit between said seal and said skirt.

The seal has a particularly simple structure and can easily be mounted between the two rings of the rolling bearing because there is no need to angularly orient the seal relative to the top ring during the rolling bearing assembly thanks to the annular structure of the radial rib and to the friction contact between said rib and the skirt which prevents rotation of the seal after mounting.

Besides, with such a circumferentially continuous rib extending radially, the seal has an improved static sealing with the top ring due to the external contact between said rib and the skirt of the top ring over 360°. "Static sealing" means the sealing made between two parts that do not move relative to one another.

In one embodiment, the skirt of the top ring extends axially.

In one embodiment, the seal comprises an annular top radial surface in contact with a radial portion of the top ring to provide a further static sealing with said top ring. The contacting surfaces between the seal and the top ring are thus increased in order to have a better static sealing effect of the seal.

In a preferred embodiment, the seal comprises a chamfer in the form of a frustroconical surface disposed between the top radial surface and the annular radial rib.

In one embodiment, the skirt of the top ring comprises a plurality of radial protrusions spaced apart from one another in the circumferential direction. Alternatively, the skirt of the top ring comprises an annular radial protrusion. The radial protrusion(s) of the top ring may be obtained by deforming the skirt of the top ring axially.

The seal may also comprise an annular bottom radial surface radially offset outwards relative to the axially retaining means.

In one embodiment, the rolling bearing comprises a cage to maintain a circumferential spacing between the rolling elements. The cage may be provided with at least two extensions coming into friction contact with the bottom ring and the top ring. The cage is distinct from the seal disposed radially between the rings.

In one embodiment, the axially retaining means comprises an annular lip coming into friction contact with the bottom ring.

According to another aspect, it is proposed a suspension thrust bearing device comprising a rolling bearing as previously defined and a support element for the rolling bearing forming bearing means for a spring.

According to a further aspect, it is proposed a suspension strut for a motor vehicle comprising a suspension thrust bearing device as previously defined.

The present invention and its advantages will be more readily understood by studying the detailed description of one specific embodiment, which constitutes a non-limiting example of the present invention, and illustrated by the appended drawings on which:
- Figure 1 is a view in axial section of a rolling bearing according to an example of the invention,
- Figure 2 is a part section on a larger scale of Figure 1,
- Figure 3 is a part section of a top ring of the rolling bearing of Figure 1,

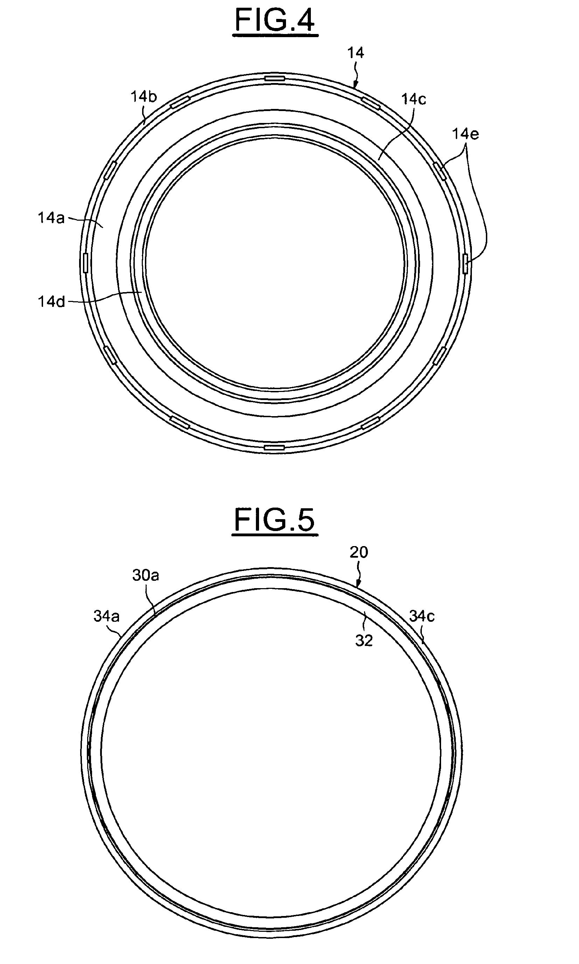

- Figure 4 is an under view of the top ring of Figure 3, and
- Figure 5 is an upper view of a seal of the rolling bearing of Figure 1.

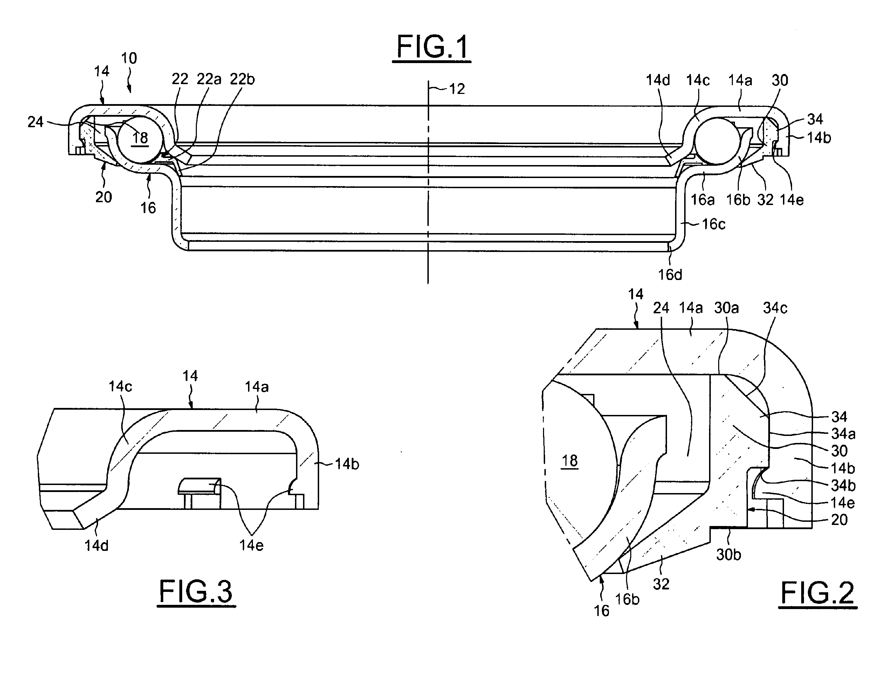

As illustrated on Figures 1 to 3, an example of rolling bearing 10, with an axis 12, comprises a top ring 14 and a bottom ring 16, between which is mounted a row of rolling elements 18, which in this case are balls. The rolling bearing 10 also comprises a seal 20 radially disposed between the rings 14, 16. A cage 22 is also provided between the rings so as to maintain an even circumferential spacing between the rolling elements 18.

The top ring 14 and the bottom ring 16 are made of a thin metal sheet, which has been stamped or rolled so as to define toroidal tracks or raceways for the rolling elements 18 between the two rings 14, 16.

The top ring 14 comprises an annular radial portion 14a with an external annular axial skirt 14b of small thickness and of large diameter at this end, opposite to the rolling element 18, and extending axially downward. A small-diameter edge of the radial portion 14a is extended towards the inside and downward by a toroidal portion 14c. The concave external surface of the toroidal portion 14c forms the track or raceway for the rolling elements 18. The bottom end of the toroidal portion 14c is extended radially inwards and axially downward by a short frustroconical portion 14d.

The top ring 14 also comprises a plurality of radial protuberances or protrusions 14e provided on the internal bore of the external axial skirt 14b, in the vicinity of its bottom end. The protrusions 14e are directed radially towards the inside and are evenly spaced relative to one another in the circumferential direction. The protrusions 14e forms hooks directed radially towards the inside, towards the bottom ring 16. In this example, the top ring 14 comprises twelve protrusions 14e.

The protrusions 14e may be advantageously formed by axially deforming partly the bottom end of the axial skirt 14b with an appropriate tool in order to create local deformations of material which extend radially inwards. It is easier to stamp bosses or protrusions 14a by deforming the skirt 14b axially rather than achieve radial deformations in the metal part. Besides, the process for creating the protrusions 14e is very cheap since it is done during the stamping process of the top ring 14.

The bottom ring 16 comprises an annular radial portion 16a extending radially opposite from the radial portion 14a of the top ring. The radial portion 16a is extended towards the outside and upward by a toroidal portion 16b. The concave internal surface of the toroidal portion 16b forms the track or raceway for the rolling elements 18. The bottom ring 16 also comprises a cylindrical portion 16c extending axially downward a small-diameter edge of the radial portion 16a and providing with a radially folded edge 16d at its end. The toroidal portion 16b of the bottom ring 16 and the external axial skirt 14b of the top ring 14 are separated radially from one another by an annular space 24 in which the seal 20 is mounted.

The seal 20 is made in one part and is made from plastic material by molding, for example in polyamide (PA), in polytetrafluoroethylene (PTFE) or in rubber. The seal 20 has an annular shape and comprises an annular axial skirt or portion 30 and an annular lip 32 projecting radially inward from an axial bottom edge of the axial portion 30. Said axial portion 30 and the lip 32 apply respectively a static sealing with the top ring 14 and a dynamic sealing with the bottom ring 16.

The axial portion 30 is delimited axially by two opposite annular radial surfaces 30a, 30b. The top radial surface 30a bears against a bottom surface of the radial portion 14a of the top ring 14 and forms a static sealing with said ring over 360°. The contact between the top radial surface 30a and the bottom surface of the radial portion 14a is located radially near the axial skirt 14b. The bottom radial surface 30b is approximatively situated in a radial plane containing the bottom end surface of the axial skirt 14b of the top ring.

The axial portion 30 comprises an annular rib 34 extending radially outwards, towards the axial skirt 14b of the top ring 14. An annular outer surface 34a of the rib 34 comes into friction contact against the internal bore of the external axial skirt 14b of the top ring 14. Therefore, the annular rib 34 forms an external static sealing contact with the top ring 14 over 360°.

The seal 20 is fast in rotation with the top ring 14 due mainly to the friction contact forces between the annular rib 34 and the axial skirt 14b. The diameter of the outer surface 34a of the annular rib 34 in a free state is advantageously greater than the diameter of the bore of the external axial skirt 14b in order to have a permanent interference fit between the seal 20 and the top ring 14. This surely prevents a rotation of the seal relative to the top ring 14. Besides, the interference fit between the outer surface 34a of the annular rib 34 and the axial skirt 14b enhances the efficiency of the static sealing between these two elements. The annular rib 34 is adapted to form a means for fixing or attaching the seal 20 to the top ring 14 in the circumferential direction.

The annular rib 34 is also adapted to cooperate with the radial protrusions 14e of the skirt 14 of the top ring 14 to serve as an axial retaining means for the seal relative to the top ring 14. An annular bottom radial surface 34b of the rib 34 bears against the top surfaces of the radial protrusions 14e of the skirt 14. The external diameter of the radial rib 34 is greater than the inner diameter of the radial protrusions 14e so that a diametral interference exists between the seal 20 and the top ring 14 to prevent an axial displacement of said seal 20 downward. The annular rib 34 therefore forms an axial retention means interacting with a complementary axial retention means of the top ring 14 and axially positioned above the latter. The seal 20 is locked in axial direction downward and upward respectively by the radial protrusions 14e and the radial portion 14a of the top ring 14. Axial narrow passageways are formed between the internal edges of the radial protrusions 14e and the axial portion 30 of the seal.

The seal 20 also comprises an annular chamfer 34c in the form of a frustroconical surface linking the outer surface 34a of the rib 34 and the top radial surface 30a of the axial portion 30. The chamfer 34c is adapted to cooperate with the internal edges of the radial protrusions 14e of the top ring 14 when the seal 20 is mounted between said top ring and the bottom ring 16. Specifically, the seal 20 is mounted between said rings with a simple axial pushing movement on the bottom radial surface 30b. With the axial pushing movement, when the chamfer 34c bears against the internal edges of the radial protrusions 14e, by virtue of the frustroconical form of said chamfer, the axial portion 30 is radially moved towards the bottom ring 16 until the ridge between the chamfer 34c and the outer surface 34a of the rib 34 reaches the internal edges of the radial protrusions 14e. Then, the axial portion 30 partly recovers by elasticity its initial shape. The seal 20 is still axially pushed until the top radial surface 30a comes into contact with the bottom radial surface of radial portion 14a of the outer ring 14. In this mounted position, the bottom radial surface 34b and the outer surface 34a of the rib 34 are respectively in contact friction with the radial protrusions 14e and the skirt 14b of the top ring 14.

In the illustrated embodiment, the bottom surfaces of the protrusions 14e extend in a common radial plane. Alternatively, it may also be possible to foresee for these bottom surfaces an inclined form similar to the one of the chamfer 34c to ensure during the installation of the seal 20 inside the top ring 14, a smooth and progressive radial deformation inwards of the axial portion 30 of the seal. To this end, some local recesses may be provided in the thickness of the axial portion to enhance its flexibility.

The annular lip 32 extends obliquely downwards from the bottom edge of the axial portion 30 and is radially offset inwards relative to the bottom radial surface 30b of said portion. The lip 32 comes into friction contact with the outer surface of the toroidal portion 16b of the bottom ring 16. The lip 32 forms an internal dynamic sealing with the bottom ring 16.

The annular lip 32 is also adapted to axially retain the bottom ring 16 relative to the top ring 14 before the rolling bearing 10 is mounted into the suspension thrust bearing device. To this end, the inner diameter of the lip 32 is smaller than the outer diameter of the bottom ring 16.

As above-mentioned, the seal 20 is used to close the external space 24 delimited between the toroidal portion 16b of the bottom ring 16 and the external axial skirt 14b of the top ring 14. In order to close the internal annular space delimited between the radial portion 16a of the bottom ring and the frustroconical portion 14d of the top ring, the cage 22 comprises a lip having a first annular radial extension 22a which comes into friction contact with the frustroconical portion 14d and a second annular axial extension 22b extending a small-diameter edge of said first radial extension and bearing against the bore of the cylindrical portion 16c of the bottom ring 16.

It should be noted that the embodiment illustrated and described was given merely by way of a non-limiting indicative example and that modifications and variations are possible within the scope of the invention. Thus, the invention applies not only to an angular contact ball bearing with a single row of balls but also to other types of rolling bearing, for example bearings having four points contacts and/or with double rows of balls, or with at least three rows of balls. It is easily understood that it could also be possible to use bearing with other types of rolling members such as rollers. Otherwise, in the illustrated embodiment, the protrusions of the top ring are spaced relative to one another in the circumferential direction. Alternatively, it may also be possible to form a circumferentially continuous protrusion or rib on the internal edge of the external axial skirt of the top ring to cooperate with the annular outer rib of the seal.

The specific structure of the rib of the seal having a circumferentially continuous outer surface in friction contact with the skirt of the top ring permits to obtain a seal particularly easy to mount into the rolling bearing with a simple axial pushing movement without angular orientation. Besides, the seal is fixed to the top ring without using an additional component.

## Claims

1. Rolling bearing comprising a bottom ring (16), a top ring (14), at least one row of rolling elements (18) mounted between the rings, and a seal (20) radially disposed between said rings and made from plastic material, the seal comprising attaching means adapted to cooperate with the top ring to fix the seal to said ring and axially retaining means (32) for the bottom ring relative to the top ring, **characterized in that** the attaching means of the seal comprises an annular radial rib (34) coming into friction contact against a skirt (14b) of the top ring and axially positioned above at least a radial protrusion (14e) of said skirt so as to interfere diametrically with said radial protrusion, the external diameter of the annular radial rib (34) in a free state being greater than the internal diameter of the skirt (14b) so as to create a permanent interference fit between said seal and said skirt.

2. Rolling bearing according to claim 1, wherein the seal comprises an annular top radial surface (30a) in contact with a radial portion (14a) of the top ring to provide a further static sealing with said top ring.

3. Rolling bearing according to claim 2, wherein the seal comprises a chamfer (34c) in the form of a frustroconical surface disposed between the top radial surface (30a) and the annular radial rib (34).

4. Rolling bearing according to any of the preceding claims, wherein the skirt (14b) comprises a plurality of radial protrusions (14e) spaced apart from one another in the circumferential direction.

5. Rolling bearing according to any of claims 1 to 3, wherein the skirt (14b) comprises an annular radial protrusion.

6. Rolling bearing according to any of the preceding claims, wherein the radial protrusion(s) of the top ring is obtained by deforming the skirt (14b) axially.

7. Rolling bearing according to any of the preceding claims, wherein the axially retaining means comprises an annular lip (32) coming into friction contact with the bottom ring.

8. Rolling bearing according to any of the preceding claims, comprising a cage (22) to maintain a circumferential spacing between the rolling elements (18), said cage being provided with at least two extensions (22a, 22b) coming into friction contact with the bottom ring and the top ring.

9. Suspension thrust bearing device comprising a rolling bearing according to any of the preceding claims and a support element for the rolling bearing forming bearing means for a spring.

10. Suspension strut for a motor vehicle comprising a suspension thrust bearing device according to claim 9.

## Patentansprüche

1. Wälzlager, das einen unteren Ring (16), einen oberen Ring (14), mindestens eine zwischen den Ringen montierte Reihe Wälzkörper (18) sowie eine radial zwischen den Ringen befindliche Dichtung (20) umfasst, die aus Kunststoffmaterial besteht, wobei die Dichtung ein Befestigungsmittel, das so ausgebildet ist, dass es mit dem oberen Ring zusammenwirkt, um die Dichtung an diesem Ring zu fixieren, und ein axial zurückhaltendes Mittel (32) für den unteren Ring im Verhältnis zum oberen Ring umfasst, **dadurch gekennzeichnet, dass** das Befestigungsmittel der Dichtung eine ringförmige radiale Rippe (34) umfasst, die in Reibungskontakt gegen eine Schürze (14b) des oberen Rings kommt und axial über mindestens einem radialen Vorsprung (14e) der Schürze positioniert ist, um diametral in den radialen Vorsprung einzugreifen, wobei der Außendurchmesser der ringförmigen radialen Rippe (34) in einem freien Zustand größer als der Innendurchmesser der Schürze (14b) ist, um so einen permanenten Passsitz zwischen der Dichtung und der Schürze zu bewirken.

2. Wälzlager nach Anspruch 1, bei dem die Dichtung eine ringförmige obere radiale Fläche (30a) umfasst, die in Kontakt mit einem radialen Abschnitt (14a) des oberen Rings steht, um eine weitere statische Abdichtung mit dem oberen Ring bereitzustellen.

3. Wälzlager nach Anspruch 2, bei dem die Dichtung eine Abschrägung (34c) in der Form einer kegelstumpfförmigen Fläche umfasst, die sich zwischen der oberen radialen Fläche (30a) und der ringförmigen radialen Rippe (34) befindet.

4. Wälzlager nach einem der vorstehend aufgeführten Ansprüche, bei dem die Schürze (14b) mehrere radiale Vorsprünge (14e) umfasst, die mit Abstand voneinander in der Umfangsrichtung vorgesehen sind.

5. Wälzlager nach einem der Ansprüche 1 bis 3, bei dem die Schürze (14b) einen ringförmigen radialen Vorsprung umfasst.

6. Wälzlager nach einem der vorstehend aufgeführten Ansprüche, bei dem der radiale Vorsprung/die radialen Vorsprünge des oberen Rings durch axiale Verformung der Schürze (14b) entsteht/entstehen.

7. Wälzlager nach einem der vorstehend aufgeführten Ansprüche, bei dem das axial zurückhaltende Mittel eine ringförmige Lippe (32) umfasst, die in Reibungskontakt mit dem unteren Ring kommt.

8. Wälzlager nach einem der vorstehend aufgeführten Ansprüche, das einen Käfig (22) umfasst, um einen Umfangsabstand zwischen den Wälzkörpern (18) aufrechtzuerhalten, wobei der Käfig mit mindestens zwei Erweiterungen (22a, 22b) ausgestattet ist, die in Reibungskontakt mit dem unteren Ring und dem oberen Ring kommen.

9. Aufhängungsvorrichtung mit Axiallager, die ein Wälzlager nach einem der vorstehend aufgeführten Ansprüche sowie ein Stützelement für das Wälzlager umfasst, das ein Lagermittel für eine Feder bildet.

10. Aufhängungsbein für ein Kraftfahrzeug, das eine Aufhängungsvorrichtung mit Axiallager nach Anspruch 9 umfasst.

## Revendications

1. Roulement comprenant une bague inférieure (16), une bague supérieure (14), au moins une rangée d'éléments roulants (18) montés entre les bagues, et un joint (20) disposé radialement entre lesdites bagues et réalisé en matière plastique, le joint comprenant un moyen de fixation adapté pour coopérer avec la bague supérieure pour fixer le joint sur ladite bague et un moyen de retenue axiale (32) de la bague inférieure par rapport à la bague supérieure, **caractérisé en ce que** le moyen de fixation du joint comprend une nervure radiale annulaire (34) qui vient en contact de friction contre une jupe (14b) de la bague supérieure et positionnée axialement au-dessus d'au moins une protubérance radiale (14e) de ladite jupe afin d'interférer de façon diamétrale avec ladite protubérance radiale, le diamètre extérieur de la nervure radiale annulaire (34), à l'état libre, étant supérieur au diamètre intérieur de la jupe (14b) afin de créer un ajustement serré permanent entre ledit joint et ladite jupe.

2. Roulement selon la revendication 1, dans lequel le joint comprend une surface radiale supérieure annulaire (30a) en contact avec une partie radiale (14a) de la bague supérieure pour fournir une étanchéité statique supplémentaire avec ladite bague supérieure.

3. Roulement selon la revendication 2, dans lequel le joint comprend un chanfrein (34c) sous la forme d'une surface tronconique placée entre la surface radiale supérieure (30a) et la nervure radiale annulaire (34).

4. Roulement selon l'une quelconque des revendications précédentes, dans lequel la jupe (14b) comprend une pluralité de protubérances radiales (14e) espacées les unes des autres dans le sens circonférentiel.

5. Roulement selon l'une quelconque des revendications 1 à 3, dans lequel la jupe (14b) comprend une protubérance radiale annulaire.

6. Roulement selon l'une quelconque des revendications précédentes, dans lequel la ou les protubérance(s) radiale(s) de la bague supérieure est obtenue en déformant la jupe (14b) axialement.

7. Roulement selon l'une quelconque des revendications précédentes, dans lequel le moyen de retenue axiale comprend une lèvre annulaire (32) venant en contact de friction avec la bague inférieure.

8. Roulement selon l'une quelconque des revendications précédentes, comprenant une cage (22) pour maintenir un espacement circonférentiel entre les éléments roulants (18), ladite cage étant pourvue d'au moins deux extensions (22a, 22b) venant en contact de friction avec la bague inférieure et la bague supérieure.

9. Dispositif de butée de suspension comprenant un roulement selon l'une quelconque des revendications précédentes et un élément de support pour le roulement formant un moyen de palier pour un ressort.

10. Jambe de suspension pour véhicule à moteur comprenant un dispositif de butée de suspension selon la revendication 9.
